# EUROPÄISCHE PATENTSCHRIFT

(11) **EP 1 248 986 B1**
(45) Veröffentlichungstag und Bekanntmachung des Hinweises auf die Patenterteilung: **13.08.2003**
(21) Anmeldenummer: 00988612.8
(22) Anmeldetag: 14.11.2000
(51) Int. Cl.: G06F 13/362, G06F 13/372

(54) **VERFAHREN UND VORRICHTUNG ZUM AUSTAUSCH VON DATEN ZWISCHEN WENIGSTENS ZWEI MIT EINEM BUSSYSTEM VERBUNDENEN TEILNEHMERN**
METHOD AND DEVICE FOR EXCHANGING DATA BETWEEN AT LEAST TWO USERS THAT ARE CONNECTED TO A BUS SYSTEM
PROCEDE ET DISPOSITIF POUR L'ECHANGE DE DONNEES ENTRE AU MOINS DEUX ABONNES RELIES PAR UN SYSTEME A BUS

(30) Priorität: 05.01.2000 DE 10000305
(43) Veröffentlichungstag der Anmeldung: 16.10.2002
(73) Patentinhaber: ROBERT BOSCH GMBH, 70442 Stuttgart (DE)
(72) Erfinder: WEIGL, Andreas, 76351 Linkenheim-Hochstetten (DE); FUEHRER, Thomas, 70839 Gerlingen (DE); MUELLER, Bernd, 71229 Leonberg (DE); HARTWICH, Florian, 72762 Reutlingen (DE); HUGEL, Robert, 76199 Karlsruhe (DE)
(86) Internationale Anmeldenummer: DE0004021
(87) Internationale Veröffentlichungsnummer: WO01052074

(56) Entgegenhaltungen:
- EP-A- 0 675 445
- US-A- 4 815 110
- DECOTIGNIE J D ET AL: "PRODUCER-DISTRIBUTOR-CONSUMER MODEL ON CONTROLLER AREA NETWORK" PROCEEDINGS OF THE IFAC/IFIC WORKSHOP, REAL TIME PROGRAMMING, 6. November 1995 (1995-11-06), XP002074139

## Beschreibung

### Stand der Technik

Die Erfindung betrifft Verfahren und Vorrichtung zum Austausch von Daten zwischen wenigstens zwei mit einem Bussystem verbundenen Teilnehmern gemäß den Oberbegriffen der unabhängigen Ansprüche.

Als Stand der Technik in der automobilen Vernetzung wird seit einigen Jahren das CAN-Protokoll eingesetzt. Die Kommunikation ist dort ereignisgesteuert geregelt. Sehr große Lasten können erzeugt werden, wenn das Senden verschiedener Nachrichten zur gleichen Zeit initiiert werden soll. Der nicht-destruktive Arbitrierungsmechanismus von CAN garantiert, daß sequentielle Senden aller Nachrichten gemäß der Priorität ihrer Identifier bzw. Kennungen. Für harte Echtzeitsysteme muß vorab eine Analyse der Laufzeiten und Buslasten für das gesamte System gemacht werden, um sicher zu gehen, daß alle Nachrichten-Deadlines eingehalten werden können (selbst unter Spitzenbelastung).

Es gibt bereits Kommunikationsprotokolle, die auf einer zeitgesteuerten Abarbeitung basieren, wie z.B. TTP/C oder Interbus-S. Die Besonderheit hierbei ist, daß der Buszugriff bereits vorab durch Vergabe von Sendezeitpunkten geplant wird. Während der Laufzeit kann es somit zu keinen Kollisionen kommen. Ebenso wird aber eine Spitzenlast am Kommunikationsbus vermieden. Dabei ist der Bus also häufig nicht vollständig ausgelastet.

Es zeigt sich, daß der Stand der Technik nicht in jeder Hinsicht optimale Ergebnisse zu liefern vermag.

DECOTIGNIE J D ET AL:'PRODUCER-DISTRIBUTOR-CONSUMER MODEL ON CONTROLLER AREA NETWORK' PROCEEDINGS OF THE IFAC/IFIC WORKSHOP, REAL TIME PROGRAMMING, vom 6. November 1995 offenbart Datenübertragung über einen CAN-Bus, wobei jede Nachricht eine, die enthaltenen Daten charakterisierende Kennung enthält, und die Übertragung der Nachrichten in Zeitfenstern stattfindet, gesteuert durch Referenznachrichten (Remote-Frames), übertragen von einem ersten Teilnehmer.

### Vorteile der Erfindung

Die Erfindung beinhaltet somit ein Verfahren und eine Vorrichtung zum Austausch von Daten in Nachrichten zwischen wenigstens zwei Teilnehmern, welche mittels eines Bussystems verbunden sind, wobei die, die Daten enthaltenden Nachrichten durch die Teilnehmer über das Bussystem übertragen werden und jede Nachricht eine, die enthaltenen Daten charakterisierende Kennung enthält, wobei jeder Teilnehmer anhand der Kennung entscheidet, ob er die Nachricht empfängt. Dabei wird als zugrundeliegendes Bussystem bzw. Busprotokoll insbesondere zweckmässigerweise der CAN-Bus eingesetzt. Die Erfindung bezieht sich aber allgemein auf jedes Bussystem bzw. Busprotokoll bei welchem eine objektorientierte Nachrichten- bzw. Datenübertragung eingesetzt wird, also die Nachricht und/oder die darin enthaltenen Daten durch eine Kennung (Identifier) eindeutig erkennbar sind. Dies gilt für alle Busse bei denen also nicht die Teilnehmer sondern die Nachrichten bzw. deren Daten adressiert werden, insbesondere den CAN-Bus.

Dabei werden die Nachrichten vorteilhafterweise durch einen ersten Teilnehmer zeitlich derart gesteuert, dass der erste Teilnehmer wiederholt eine Referenznachricht in wenigstens einem vorgebbaren zeitlichen Abstand über den Bus überträgt und der zeitliche Abstand in Zeitfenster vorgebbarer Länge unterteilt wird, wobei die Nachrichten in den Zeitfenstern übertragen werden.

Die Erfindung umfaßt vorteilhafterweise somit gegenüber dem Stand der Technik eine höhere Protokollschicht zu dem eigentlichen Bus(CAN)-Protokoll, das im Rahmen der erfindungsgemäßen zeitgesteuerten Kommunikation unverändert erhalten bleibt. Die zeitgesteuerte Kommunikation erlaubt es somit vorteilhafterweise, den Bus voll auszulasten und gleichzeitig die Latenzzeiten für jede Nachricht auf einem definierten Wert zu halten.

Die Erfindung umfaßt also eine zyklisch ablaufende Übertragung von Bus(CAN)-Nachrichten. Dadurch wird ein deterministisches und zusammensetzbares Kommunikationssystem erzeugt. Ein solches System wird bei dieser Erfindung im Weiteren als TTCAN bezeichnet. Ebenso wird im Weiteren von einem CAN-Bus ausgegangen, wobei wie oben genannt die Überlegungen allgemein für alle Bussysteme bzw. Busprotokolle mit objektorientierter Nachrichtenübertragung gelten.

Zweckmäßigerweise werden die Referenznachricht und die nachfolgenden Zeitfenster bis zur nächsten Referenznachricht zu einem ersten Zyklus vorgebbarer Länge und/oder vorgebbarer Struktur zusammengefasst, wobei die Struktur der Länge, Anzahl und zeitlichen Position der auf die Referenznachricht folgenden Zeitfenster in dem zeitlichen Abstand entspricht.

Weiterhin werden vorteilhafterweise mehrere erste Zyklen gleicher Struktur zu einem zweiten Zyklus zusammengefasst, wobei in dem zweiten Zyklus auch Nachrichten in Zeitfenstern wiederholt übertragen werden, deren zeitlicher Abstand größer ist als die zeitliche Länge des ersten Zyklus.

Zweckmässigerweise unterbleibt in wenigstens einem Zeitfenster des ersten oder des zweiten Zyklus eine zyklische Nachrichtenübertragung. In diesen zunächst leeren Zeitfenstern können dann arbitrierende Nachrichten übertragen werden, also solche, die nicht zyklisch übertragen werden müssen sondern wenn z.B. bestimmte Abläufe beendet sind zur Verfügung stehen.

Weitere Vorteile und vorteilhafte Ausgestaltungen ergeben sich aus der Beschreibung und den Merkmalen der Ansprüche.

### Zeichnung

Die Erfindung wird nachfolgend anhand der in der Zeichnung enthaltenen Figuren dargestellt.

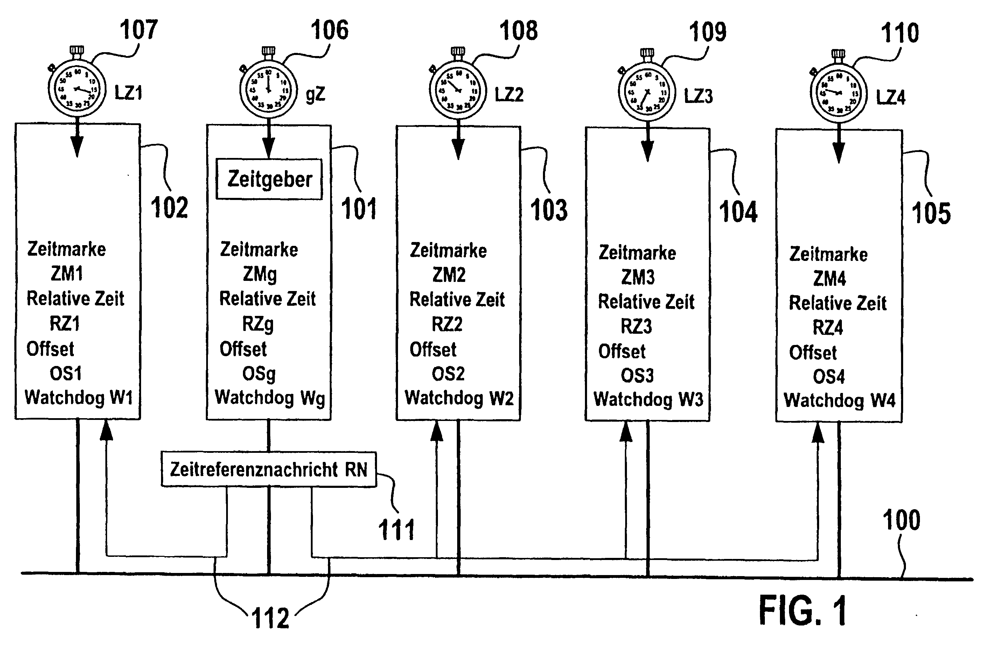

Dabei zeigt Figur 1 schematisch ein Bussystem mit mehreren Teilnehmern.

In Figur 2 ist der prinzipielle Ablauf der ersten Zyklen oder Basiszyklen und der zweiten Zyklen, der Gesamtzyklen über der Zeit dargestellt.

Figur 3 veranschaulicht im Detail die Anlage und Nachrichtenbelegung der Zeitfenster.

In Figur 4 wird dann ein Gesamtzyklus mit 7 Basiszyklen und diversen Sendegruppen der Nachrichten sowie arbitrierender Nachrichten dargestellt.

### Beschreibung der Ausführungsbeispiele

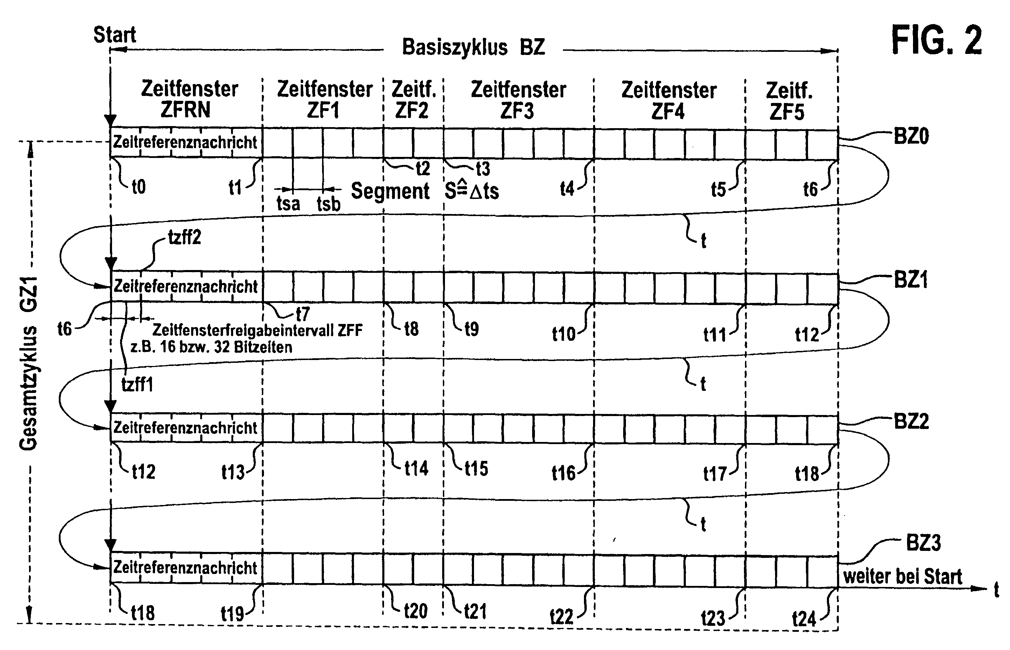

TTCAN basiert im wesentlichen auf einer zeitgesteuerten, periodischen Kommunikation, die durch einen Zeitgeber (Knoten, Teilnehmer) mit Hilfe einer Zeitreferenznachricht, oder kürzer Referenznachricht RN getaktet wird. Die Periode bis zur nächsten Referenznachricht RN wird als Basiszyklus bezeichnet und unterteilt sich in n Zeitfenster (siehe Figur 2). Jedes Zeitfenster erlaubt das exklusive Senden einer periodischen Nachricht mit unterschiedlicher Länge. Diese periodischen Nachrichten werden in einem TTCAN-Controller durch Verwendung von Zeitmarken, die mit dem Ablauf einer logischen relativen Zeit gekoppelt sind, gesendet. TTCAN erlaubt aber auch die Berücksichtigung von freien Zeitfenstern. Diese Zeitfenster können für sogenannte spontane Nachrichten genutzt werden, wobei der Zugriff innerhalb dieser Zeitfenster auf den Bus über das Arbitrierungsschema von CAN genutzt wird (arbitrierende Nachrichten). Die Synchronisation der Zeitgeber-Uhr (Globale Zeit gZ) mit der internen lokalen Zeit der einzelnen Knoten lZ1 bis lZ4 wird berücksichtigt und effizient umgesetzt.

Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein interners Mittel, wie eine Uhr, Zähler, Taktgenerator, etc.oder extern zu dem jeweiligen Teilnehmer übertragen werden kann. Die jeweilige lokale Zeitbasis lZ1 bis lZ4 ist insbesondere ein Zähler, z.B. 16-bit aufwärtszählend, der lediglich durch einen HW-Reset beeinflußt werden darf. Die lokale Zeitbasis ist hier in jedem Knoten bzw. Teilnehmer 102 bis 105 implementiert. Ein Teilnehmer, der Zeitgeber, 101 besitzt dabei ein exponierte Stellung. Seine Zeitbasis wird als globale Zeitbasis 106 mit der globalen Zeit gZ bezeichnet und ist entweder in dem Zeitgeber 101 implementiert oder wird extern an diesen übertragen. Die globale Zeit gZ wird prinzipiell in jedem Knoten aus der lokalen Zeitbasis 107 bis 110 bzw. der lokalen Zeit lZ (lZ1 bis lZ4) und einem Offset OS1 bis OS4 gebildet. Dieser Offset Osg beim Zeitgeber 101 ist in der Regel gleich Null (Osg = 0). Alle anderen Knoten bilden ihre Sicht auf die globale Zeit gZ aus der lokalen Zeit lZ (lZ1 bis lZ4) und dem lokalen Offset OS1 bis OS4 und OSg wenn OSg ≠ 0. Der Fall, dass OSg nicht Null ist, tritt z.B. auf wenn die globale Zeit gZ von aussen an den Zeitgeber 101 übertragen wird, und dieser zusätzlich eine eigene Zeitbasis 106 enthält. Dann wird auch der Zeitgeber auf die globale Zeit gZ geeicht und gZ und die Zeitbasis 106 stimmen eventuell nicht überein. Der lokale Offset ist die Differenz zwischen der lokalen Zeit zum Sendezeitpunkt (SOF, Start Of Frame) der Referenznachricht und der vom Zeitgeber in dieser Referenznachricht übertragenen Globalen Zeit.

### Lokale Zeitbasis und die Globale Zeit

Lokale Zeitbasis: Die lokale Zeitbasis ist ein Zähler, z.B. 16-bit aufwärtszählend, der lediglich durch einen HW-Reset beeinflußt werden darf. Die lokale Zeitbasis ist in jedem Knoten implementiert.

Referenzmarken Zwischenregister: Bei jedem angenommenen SOF wird das Zwischenregister mit der lokalen Zeitbasis geladen.

Referenzmarker: Wird die aktuelle Nachricht als Referenznachricht erkannt, dann wird der Wert aus dem Zwischenregister in den Referenzmarker übernommen (als lokale Referenzmarke). Der Referenzmarker wird z.B. als 16-Bit Register ausgelegt.

Zeitgeber-Referenzmarke: Das ist die von den Zeitnehmern empfangene Referenzmarke des Zeitgebers in der Referenznachricht.

Lokaler Offset zur Globalen Zeit: Der lokale Offset zur Globalen Zeit ist die Differenz zwischen der Referenzmarke im Zwischenregister und der in der Referenznachricht empfangenen Globalen Zeitmarke. Er wird zur Berechnung der Globalen Zeit aus der lokalen Zeit verwendet.
Der Offset des Zeitgebers selbst bleibt konstant. In der Referenznachricht sendet der Zeitgeber seine lokale Referenzmarke plus lokalem Offset.

Der Zeitgeber 101 ist also auch derjenige Knoten bzw. Teilnehmer, der die Zeitreferenznachricht 111 bzw. kürzer die Referenznachricht RN aussendet. Der Pfeil 112 zeigt an, dass die Referenznachricht RN 111 an die übrigen Teilnehmer 102 bis 105, insbesondere zeitgleich, versendet wird.

Die Referenznachricht RN ist die Basis für den zeitgesteuerten, periodischen Betrieb von TTCAN. Sie ist durch einen speziellen Identifier, eine spezielle Kennung, eindeutig gekennzeichnet und wird von allen Knoten, hier 102 bis 105, als Taktgeber empfangen. Sie wird von dem Zeitgeber 101 prinzipiell zyklisch ausgesendet. Die Referenznachricht kann folgende Daten beinhalten: Die Nummer des aktuellen Basiszyklus BZn, die Referenzmarke des Zeitgebers in Globaler Zeit.

Die Referenzmarke entsteht durch die Übernahme des internen Zählerstandes zum Zeitpunkt des "Start of Frame"-Bits (SOF) beim Empfang der Referenznachricht des Zeitgebers. Die Referenzmarke ist somit eine Momentaufnahme der lokalen Zeitbasis zum Empfangszeitpunkt der Referenznachricht.
Die in den Teilnehmern aufgeführte Relative Zeit RZ1 bis RZ4 und RZg ist die Differenz zwischen der lokalen Zeitbasis und der letzten Referenzmarke. Alle Definitionen bezüglich der verwendeten Zeitmarken beziehen sich auf die Relative Zeit eines einzelnen Teilnehmers. Sie kann z.B. permanent als Signal vorliegen (z.B. durch Verknüpfung der beiden Registerwerte über Gatter). Die Referenzmarke bestimmt die Relative Zeit aller Knoten am TTCAN-Bus.

Der ebenfalls dargestellte Wartchdog Wg und W1 bis W4 ist ein spezieller relativer Zeitpunkt. In jedem Knoten wird ein solcher relativer Zeitpunkt (Watchdog) definiert, zu dem spätestens eine neue Referenznachricht und somit auch Referenzmarke erwartet wird. Der Watchdog stellt somit eine spezielle Zeitmarke dar. Der Watchdog dient vor allem in der Initialisierung und Reinitialisierung zur Überwachung, ob überhaupt eine Kommunikation zustande gekommen ist. Der Watchdog sollte in diesem Fall immer größer sein als der Abstand zwischen den Referenznachrichten.

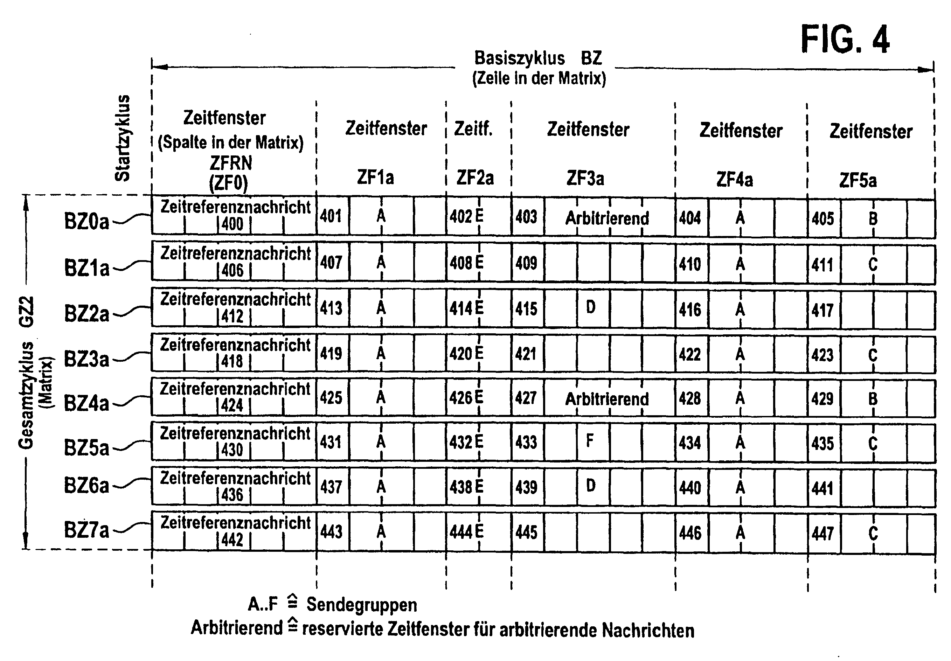

Dabei ist Eine Zeitmarke ein relativer Zeitpunkt, der die Beziehung zwischen der Relativen Zeit und einer Aktion im ursprünglichen Bus(CAN)-Controller herstellt. Eine Zeitmarke ist als Register dargestellt, wobei ein Controller mehrere Zeitmarken verwalten kann. Einer Nachricht können mehrere Zeitmarken zugeordnet sein (siehe z.B. in Figur 4: Sendegruppe A kommt sowohl in Zeitfenster ZF1a, als auch in Zeitfenster ZF4a vor).

Bezüglich der Applikation wird insbesondere ein Applikationswatchdog bedient. Dieser Watchdog muß von der Applikation regelmäßig bedient werden, um dem TTCAN-Controller den ordnungsgemäßen Betrieb zu signalisieren. Nur wenn dieser Watchdog bedient wird, werden die Nachrichten vom CAN-Controller gesendet.

Figur 2 zeigt das Prinzip der zeitgesteuerten, periodischen Nachrichten- bzw. Datenübertragung über der Zeit. Diese Nachrichtenübertragung wird durch den Zeitgeber mit Hilfe der Referenznachricht getaktet. Der Zeitraum t0 bis t6 wird dabei als Basiszyklus BZ bezeichnet und in k Zeitfenster (k ∈ N) unterteilt. Dabei werden von t0 bis t1, t6 bis t7, t12 bis t13 und t18 bis t19 also im Zeitfenster ZFRN die Referenznachrichten RN der jeweiligen Basiszyklen BZ0 bis BZ3 übertragen. Die Struktur der einer Referenznachricht RN nachfolgenden Zeitfenster ZF1 bis ZF5, also deren Länge (in Segmenten S mit Δts = tsb - tsa), deren Anzahl und deren zeitlichen Position, ist vorgebbar. Dadurch lässt sich aus mehreren Basiszyklen gleicher Struktur ein Gesamtzyklus GZ1 bilden, der bei t0 beginnt und bei t24 endet um erneut durchlaufen zu werden. Die Zeitfenster umfassen z.B. 2 bis 5 Segmente mit beispeilsweise je 32 Bitzeiten. Die Anzahl der Zeitfenster ist beispielsweise 2 bis 16, wobei auch nur ein Zeitfenster oder mehr als 16 möglich wären. Die Anzahl der Basiszyklen in einem Gesamtzyklus ist beispielsweise 2^{m} mit insbesondere m ≤ 4.

Mit tzff1 und tzff2 sind beispielhaft zwei Sendefreigabeintervalle bzw. Zeitfensterfreigabeintervalle gekennzeichnet, welche z.B. 16 oder 32 Bitzeiten dauern und den Zeitrahmen beschreiben innerhalb dessen mit dem Senden der Nachricht bezüglich des Basiszyklus begonnen werden darf.

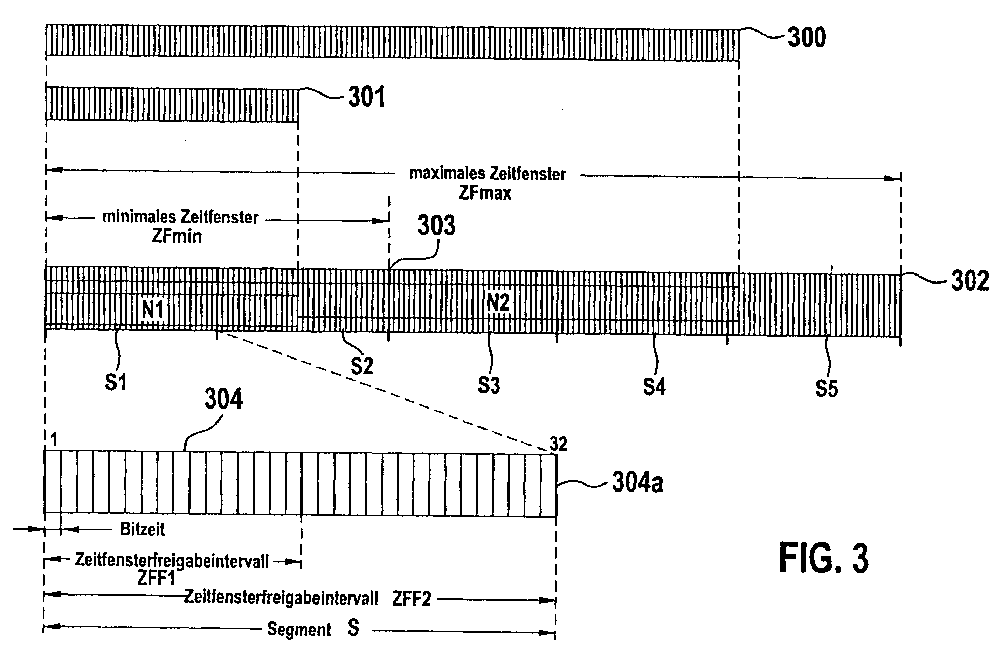

Jedes Zeitfenster erlaubt das exklusive Senden einer periodischen Nachricht mit unterschiedlicher Länge. In Figur 3 sind beispielhaft zwei Nachrichten unterschiedlicher Länge und die Zuordnung im Zeitfenster dargestellt. Nachricht 1 (N1) als Block 300 beinhaltet z.B. 130 Bit und Nachricht 2 (N2) als Block 301 beispielsweise 47 Bit.

Wie schon erwähnt können maximale und minimale Zeitfenster, abhängig von der Nachrichtenlänge vorgegeben werden, hier in diesem Beispiel z.B. zwischen 2 und 5 Segmenten pro Zeitfenster. Somit wird ein maximales Zeitfenster ZFmax als Block 302, das 5 Segmente (S1 bis S5) mit je 32 Bitzeiten umfasst und ein minimales Zeitfenster ZFmin als Block 303, welches 2 Segmente (S1 und S2) mit je 32 Bitzeiten umfasst vorgegeben. In diesen werden die Nachrichten N1 und N2 übertragen, wobei die Nachrichten also die Zeitfenster nicht vollständig ausfüllen müssen, vielmehr werden die Zeitfenstergrössen entsprechend der Nachrichtenlänge vorgegeben. ZFmax muss somit ausreichend Zeit bzw. Platz für die längste mögliche Nachricht, z.B.130 Bit bzw. Bitzeiten bieten und ZFmin kann an die kürzest mögliche Nachricht, z.B. 47 Bit, angepasst werden.

Generell ist das Zeitfenster der Zeitrahmen der für eine bestimmte Nachricht zur Verfügung steht (siehe Figur 3). Das Zeitfenster einer Nachricht wird mit dem Anliegen der Sendefreigabe geöffnet und der Beginn dieses Fensters stimmt prinzipiell mit einer definierten Zeitmarke überein. Die Länge des Zeitfensters wird aus i Segmenten mit beispielsweise 32 Bitzeiten (vgl Block 304a) bestimmt. Die Segmentierung zu insbesondere 32 Bitzeiten stellt dabei eine HW-freundliche Größe dar. Das Zeitfenster darf nicht kürzer sein, als die längste in diesem Zeitfenster vorkommende Nachricht. Die Bitzeit ist insbesondere die nominale CAN-Bitzeit.

Das Sendefreigabeintervall oder Zeitfensterfreigabeintervall beschreibt den Zeitrahmen, innerhalb dessen mit dem Senden der Nachricht begonnen werden darf. Das Sendefreigabeintervall ist ein Teil des Zeitfensters. Die Freigabe liegt also im Intervall Zeitmarke und Zeitmarke plus Delta an. Der Wert Delta ist deutlich kleiner als die Länge des Zeitfensters (z.B. 16 oder 32 Bitzeiten für ZFF1 oder ZFF2). Eine Nachricht deren Beginn nicht innerhalb des Sendefreigabeintervalls liegt, darf nicht gesendet werden.

Figur 4 stellt nun einen Gesamtzyklus (Sendematrix) GZ2 dar. Gesamtzyklus (Sendematrix): Alle Nachrichten (RN, A bis F und Arbitrierend) aller Teilnehmer werden als Komponenten einer Sendematrix organisiert (siehe Figur 4). Die Sendematrix besteht aus einzelnen Basiszyklen BZ0a bis BZ7a. Alle Basiszyklen des Gesamtzyklus GZ2 haben die gleiche Struktur. Diese Basiszyklen können wahlweise aus exklusiven (A bis F) und arbitrierenden Komponenten aufgebaut sein. Die Gesamtzahl der Zeilen (also Basiszyklen BZ0a bis BZ7a) ist hier eine Zahl 2" = 8 mit m = 3.

Ein Basiszyklus (Zeile der Sendematrix) beginnt mit einer Referenzmarke in der Referenznachricht RN und besteht aus mehreren (i) aufeinander folgenden Zeitfenstern definierter Länge (erstes Zeitfenster ZF0 bzw. ZFRN für RN). Die Anordnung der Nachrichten innerhalb des Basiszyklus kann frei festgelegt werden. Ein Zeitfenster wird für exklusive Komponenten mit einem CAN Nachrichtenobjekt verknüpft. Ein Zeitfenster kann auch frei gelassen werden (409,421,441,417,445) oder für arbitrierende Komponenten genutzt werden (403, 427).

Eine Sendegruppe (Spalte der Sendematrix, A bis F) bilden Nachrichten, die immer im gleichen Zeitfenster, aber in unterschiedlichen Basiszyklen gesendet werden (siehe Figur 4). Somit kann eine Periode aufgebaut werden, z.B. A in ZF1a und ZF4a: 401,407,413,419,425,431,437,443 und 404,410,416,422,428,434,440,446. Innerhalb einer Sendegruppe kann ein Nachrichtenobjekt (eines Zeitfensters) mehrfach gesendet werden. Die Periode einer Nachricht innerhalb einer Sendegruppe muß eine Zahl 2¹ sein, wobei gilt: l <= m.

Das Nachrichtenobjekt bzw. die Nachricht entspricht dem Nachrichtenobjekt des Busses, insbesondere in CAN, und umfaßt den Identifier bzw. die Kennung sowie die Daten selbst. In TTCAN wird das Nachrichtenobjekt um wenigstens eine der folgenden Eintragungen, bevorzugter Weise um alle drei, in der Sendematrix ergänzt: Zeitfenster, Basismarke, Wiederholrate.

Das Zeitfenster ist die Position (ZF0, ZF1a bis ZF5a) im Basiszyklus (BZn, Zeile der Sendematrix). Der Beginn des Zeitfensters ist definiert durch Erreichen einer bestimmten Zeitmarke.

Die Basismarke gibt an, in welchem Basiszyklus (BZ0a bis BZ7a) im Gesamtzyklus die Nachricht erstmalig gesendet wird.

Die Wiederholrate definiert nach wievielen Basiszyklen diese Übertragung wiederholt wird.

Um die Gültigkeit eines Nachrichtenobjekts für den CAN-Controller zu kennzeichnen, gibt es ein "permanentes Senderequest", das eine permanente Freigabe des Objekts bedeutet (für exklusive Komponenten siehe unten) und ein "einzelnes Senderequest", das eine einmalige Gültigkeit des Objekts bedeutet (für arbitrierende Komponenten siehe unten).

Die automatische Retransmission aus CAN ist für die Nachrichten in TTCAN zweckmässigerweise ausgeschaltet.

Im weiteren wird nun nochmals die Nachrichtenübertragung - Periodische Nachrichten und Spontane Nachrichten im Basiszyklus bzw. im Gesamtzyklus, insbesondere bezüglich der Applikation, beschrieben. Dabei werden wieder exklusive Nachrichten also periodische Nachrichten und arbitrierende also spontane Nachrichten unterschieden.

### Exklusive Nachrichtenobjekte (periodische Nachrichten):

Exklusive Nachrichtenobjekte werden gesendet, wenn der Applikationswatchdog gesetzt ist, die "permanente Sendeanforderung" der Applikation an den CAN-Controller gesetzt ist und das Sendefreigabeintervall des zugehörigen Zeitfensters geöffnet ist. In diesem Fall stimmt die Zeitmarke für das Nachrichtenobjekt mit der Relativen Zeit überein. Die permanente Sendeanforderung bleibt gesetzt, bis sie von der Applikation selbst zurückgesetzt wird.

### Arbitrierende Nachrichtenobjekte (spontane Nachrichten) :

Arbitrierende Nachrichtenobjekte werden gesendet, wenn der Applikationswatchdog gesetzt ist, die "einzelne Sendeanforderung" von der Applikation an den CAN-Controller gesetzt ist und das Sendefreigabeintervall des nächsten dafür bestimmten Zeitfensters geöffnet ist. Dann ist die Zeitmarke für dieses Zeitfenster gleich der Relativen Zeit. Die Sendeanforderung wird nach erfolgreichem Senden vom CAN-Controller zurückgesetzt. Der gleichzeitige Zugriff verschiedener spontaner Nachrichten wird über die Bitarbitrierung von CAN geregelt. Verliert eine spontane Nachricht in diesem Zeitfenster gegen eine andere spontane Nachricht, so kann sie erst im nächsten dafür bestimmten Zeitfenster wieder um den Buszugang kämpfen.

Wird die gesamte Sendematrix bzw. der Gesamtzyklus durchlaufen, so ergibt sich eine zyklische, zeitgesteuerte Nachrichtenübertragung. Zeitgesteuert bedeutet, daß jede Aktion vom Erreichen eines bestimmten Zeitpunkts ausgeht (siehe Zeitmarken und Relative Zeit). Ist der Gesamtzyklus vollständig durchlaufen, d.h. alle Basiszyklen wurden einmal abgearbeitet, so wird wieder mit dem ersten Basiszyklus der Sendematrix begonnen. Es entstehen keine zeitlichen Lücken im Übergang. Ein Überblick eines solchen zeitgesteuerten Kommunikationssystems mit Zeitgeber ist in der Beschreibung und den Figuren der Zeichnung dargestellt worden.

## Patentansprüche

1. Verfahren zum Austausch von Daten in Nachrichten zwischen wenigstens zwei Teilnehmern, welche mittels eines Bussystems verbunden sind, wobei die, die Daten enthaltenen Nachrichten durch die Teilnehmer über das Bussystem übertragen werden und jede Nachricht eine, die enthaltenen Daten charakterisierende Kennung enthält, wobei jeder Teilnehmer anhand der Kennung entscheidet, ob er die Nachricht empfängt, wobei die Nachrichten durch einen ersten Teilnehmer zeitlich derart gesteuert werden, dass der erste Teilnehmer wiederholt eine Referenznachricht in wenigstens einem vorgebbaren, zeitlichen Abstand über den Bus überträgt, und der zeitliche Abstand in Zeitfenster vorgebbarer Länge unterteilt wird, wobei die Nachrichten in den Zeitfenstern übertragen werden, **dadurch gekennzeichnet, dass** die Referenznachricht eine Zeitinformation des ersten Teilnehmers enthält.

2. Verfahren nach Anspruch 1, **dadurch gekennzeichnet, dass** die Referenznachricht durch eine spezielle Kennung eindeutig gekennzeichnet ist.

3. Verfahren nach Anspruch 1, **dadurch gekennzeichnet, dass** die Zeitinformation des ersten Teilnehmers der Referenzmarke des ersten Teilnehmers entspricht.

4. Verfahren nach Anspruch 1, **dadurch gekennzeichnet, dass** eins Referenznachricht und die nachfolgenden Zeitfenster bis zur nächsten Referenznachricht zu einem ersten Zyklus vorgebbarer Länge und/oder vorgebbarer Struktur zusammengefasst werden, wobei die Struktur der Länge, Anzahl und zeitlichen Position der auf die Referenznachricht folgenden Zeitfenster in dem zeitlichen Abstand entspricht.

5. Verfahren nach Anspruch 1 und 4, **dadurch gekennzeichnet, dass** der erste Zyklus und nachfolgende Zyklen mit einer Nummer versehen werden und die Referenznachricht die Nummer des aktuellen Zyklus enthält.

6. Verfahren nach Anspruch 1, **dadurch gekennzeichnet, dass** die in den Zeitfenstern übertragenen Nachrichten den jeweiligen Zeitfenstern zugeordnet sind.

7. verfahren nach Anspruch 1 und 4, **dadurch gekennzeichnet, dass** mehrere erste Zyklen gleicher Struktur zu einem zweiten Zyklus zusammengefasst werden, wobei in dem zweiten Zyklus auch Nachrichten in Zeitfenstern wiederholt übertragen werden, deren zeitlicher Abstand größer ist als die zeitliche Länge des ersten Zyklus.

8. Verfahren nach einem der vorhergehenden Ansprüche, **dadurch gekennzeichnet, dass** in den Zeitfenstern Nachrichten zyklisch übertragen werden.

9. Verfahren nach einem der vorhergehenden Ansprüche, **dadurch gekennzeichnet, dass** in wenigstens einem Zeitfenster des ersten oder des zweiten Zyklus eine zyklische Nachrichtenübertragung unterbleibt und in diesem Zeitfenster arbitrierende Nachrichten übertragen werden.

10. Verfahren nach einem der vorhergehenden Ansprüche, **dadurch gekennzeichnet, dass** als Teil wenigstens einen Zeitfensters ein Sendefreigabeintervall vorgesehen ist, wobei eine Nachricht nur dann gesendet werden darf, wenn deren Beginn innerhalb des Sendefreigabeintervalles liegt.

11. Verfahren nach einem der vorhergehenden Ansprüche, **dadurch gekennzeichnet, dass** in jedem Knoten ein spezieller relativer Zeitpunkt definiert ist, zu dem spätestens eine neue Referenznachricht erwartet wird.

12. Vorrichtung zum Austausch von Daten in Nachrichten zwischen wenigstens zwei Teilnehmern, welche mittels eines Bussystems verbunden sind, wobei die, die Daten enthaltenen Nachrichten durch die Teilnehmer über das Bussystem übertragen werden und jede Nachricht eine, die enthaltenen Daten charakterisierende Kennung enthält, wobei jeder Teilnehmer anhand der Kennung entscheidet, ob er die Nachricht empfängt, wobei dass die Nachrichten durch einen ersten Teilnehmer zeitlich derart gesteuert werden, dass der erste Teilnehmer wiederholt eine Referenznachricht in wenigstens einem vorgebbaren zeitlichen Abstand über den Bus überträgt und Mittel enthalten sind, durch die der zeitliche Abstand in Zeitfenster vorgebbarer Länge unterteilt wird und durch die die Nachrichten in den Zeitfenstern übertragen werden, **dadurch gekennzeichnet, dass** die Referenznachricht eine Zeitinformation des ersten Teilnehmers enthält.

13. Bussystem zum Austausch von Daten zwischen wenigstens zwei Teilnehmern, **dadurch gekennzeichnet, dass** mit ihm ein Verfahren gemäß einem der Ansprüche 1 bis 11 ausgeführt wird.

## Claims

1. Method for interchanging data in messages between at least two subscribers which are connected by means of a bus system, with the messages which contain the data being transmitted by the subscribers via the bus system and with each message containing an identifier which characterizes the data contained in it, with each subscriber using the identifier to decide whether it will receive the message, with the messages being controlled in time by a first subscriber in such a way that the first subscriber repeatedly transmits a reference message via the bus at at least one time interval which can be predetermined, and with the time interval being subdivided into time windows whose length can be predetermined, with the messages being transmitted in the time windows, **characterized in that** the reference message contains time information from the first subscriber.

2. Method according to Claim 1, **characterized in that** the reference message is uniquely identified by a specific identifier.

3. Method according to Claim 1, **characterized in that** the time information from the first subscriber corresponds with the reference mark from the first subscriber.

4. Method according to Claim 1, **characterized in that** a reference message and the subsequent time windows until the next reference message are combined to form a first cycle whose length can be predetermined and/or whose structure can be predetermined, with the structure corresponding to the length, the number and the time position of the time windows which follow the reference message at the time interval.

5. Method according to Claims 1 and 4, **characterized in that** the first cycle and subsequent cycles are provided with a number, and the reference message contains the number of the present cycle.

6. Method according to Claim 1, **characterized in that** the messages which are transmitted in the time windows are associated with the respective time windows.

7. Method according to Claims 1 and 4, **characterized in that** two or more first cycles with the same structure are combined to form a second cycle, with messages also being transmitted repeatedly in the second cycle in time windows, the time interval between which is greater than the time duration of the first cycle.

8. Method according to one of the preceding claims, **characterized in that** messages are transmitted cyclically in the time windows.

9. Method according to one of the preceding claims, **characterized in that** cyclic message transmission is suppressed in at least one time window in the first cycle or in the second cycle, and arbitration messages are transmitted in this time window.

10. Method according to one of the preceding claims, **characterized in that** a transmission enable interval is provided as part of at least one time window, in which a message may be transmitted only if its start is within the transmission enable interval.

11. Method according to one of the preceding claims, **characterized in that** a specific relative time point is defined in each node, until which, at the latest, a new reference message is waited for.

12. Apparatus for interchanging data in messages between at least two subscribers which are connected by means of a bus system, with the messages which contain the data being transmitted by the subscribers via the bus system and with each message containing an identifier which characterizes the data contained in it, with each subscriber using the identifier to decide whether it will receive the message, with the messages being controlled in time by a first subscriber in such a way that the first subscriber repeatedly transmits a reference message via the bus at at least one time interval which can be predetermined, and means are included which are used to subdivide the time interval into time windows whose length can be predetermined, and using which the messages are transmitted in the time windows, **characterized in that** the reference message contains time information from the first subscriber.

13. Bus system for interchanging data between at least two subscribers, **characterized in that** this bus system is used to carry out a method according to one of Claims 1 to 11.

## Revendications

1. Procédé d'échange de données sous forme de messages entre au moins deux participants reliés entre eux par un système de bus selon lequel les messages contenant des données sont transmis par le participant via le système de bus et chaque message possède une clé caractérisant les données contenues, chaque participant décide, en fonction de cette clé, s'il souhaite recevoir le message, les messages étant contrôlés dans le temps par un premier participant de telle sorte que le premier participant transmet de manière répétitive un message de référence, via le bus, sur au moins un intervalle de temps préalablement défini et que cet intervalle de temps est divisé en fenêtres de temps d'une longueur préalablement définie et dans lesquelles les messages sont transmis,
**caractérisé en ce que**
le message de référence contient des informations temporelles sur le premier participant.

2. Procédé selon la revendication 1,
**caractérisé en ce que**
le message de référence est clairement **caractérisé par** une clé spéciale.

3. Procédé selon la revendication 1,
**caractérisé en ce que**
les informations temporelles sur le premier participant correspondent à la marque de référence du premier participant.

4. Procédé selon la revendication 1,
**caractérisé en ce qu'**
un message de référence et les fenêtres de temps suivantes jusqu'au message de référence suivant sont regroupés en un premier cycle de longueur et/ou de structure préalablement définie, la structure correspondant alors à la longueur, au nombre et à la position temporelle de la fenêtre de temps suivante sur le message de référence dans l'intervalle de temps.

5. Procédé selon les revendications 1 et 4,
**caractérisé en ce que**
le premier cycle et les cycles suivants sont dotés d'un numéro et le message de référence comprend le numéro du cycle actuel.

6. Procédé selon la revendication 1,
**caractérisé en ce que**
les messages transmis dans les fenêtres de temps sont placés dans les fenêtres de temps respectives.

7. Procédé selon les revendications 1 et 4,
**caractérisé en ce que**
plusieurs premiers cycles de même structure sont regroupés en un deuxième cycle, dans lequel les messages sont également transmis de manière répétitive dans les fenêtres de temps dont l'intervalle de temps est supérieur à celui du premier cycle.

8. Procédé selon l'une des revendications précédentes,
**caractérisé en ce que**
les messages sont transmis de manière cyclique dans les fenêtres de temps.

9. Procédé selon l'une des revendications précédentes,
**caractérisé en ce que**
dans au moins une fenêtre de temps du premier ou du deuxième cycle, une transmission de messages cyclique cesse et des messages arbitraires sont transmis dans cette fenêtre de temps.

10. Procédé selon l'une des revendications précédentes,
**caractérisé en ce qu'**
un intervalle de libération d'envoi est prévu comme étant une partie d'au moins une fenêtre de temps, un message ne pouvant alors être envoyé que si le début se trouve dans l'intervalle de libération d'envoi.

11. Procédé selon l'une des revendications précédentes,
**caractérisé en ce que**
dans chaque noeud, un moment relatif spécial est défini pour lequel il faut s'attendre au plus tard à un nouveau message de référence.

12. Dispositif d'échange de données sous forme de messages entre au moins deux participants reliés entre eux par un système de bus, dans lequel les messages contenant des données sont transmis par le participant via le système de bus et chaque message possède une clé caractérisant les données contenues, chaque participant décide, en fonction de cette clé, s'il souhaite recevoir le message, les messages étant contrôlés dans le temps par un premier participant de telle sorte que le premier participant transmet de manière répétitive un message de référence, via le bus, sur au moins un intervalle de temps préalablement défini et qu'il existe des moyens grâce auxquels cet intervalle de temps est divisé en fenêtres de temps d'une longueur préalablement définie et dans lesquelles les messages sont transmis,
**caractérisé en ce que**
le message de référence contient des informations temporelles sur le premier participant.

13. Système de bus d'échange de données entre au moins deux participants,
**caractérisé en ce que**
grâce à lui, un procédé est exécuté conformément à l'une des revendications 1 à 11.
